# EUROPEAN PATENT SPECIFICATION

(11) **EP 1 292 163 B1**
(45) Date of publication and mention of the grant of the patent: **30.01.2008**
(21) Application number: 02020048.1
(22) Date of filing: 06.09.2002
(51) Int. Cl.: H04Q 7/36

(54) **Method for determining the values of the electromagnetic field generated by a radio base station in an urban environment**
Verfahren zur Bestimmung des elektromagnetischen Feldes welches von einer Funkbasisstation im Stadtbereich erzeugt wird
Procédé pour déterminer l'intensité du champ électromagnétique d'une station de base radio dans un milieu urbain

(30) Priority: 07.09.2001 IT TO20010858
(43) Date of publication of application: 12.03.2003
(73) Proprietor: Telecom Italia S.p.A., 20123 Milano (IT)
(72) Inventor: Disco, Daniele, 10148 Torino (IT); Gambin, Domenico, 10148 Torino (IT); Lacerenza, Giovanni, 10148 Torino (IT)
(74) Representative: Appelt, Christian W.

(56) References cited:
- WO-A-96/31099
- US-A- 5 949 988
- AGELET F A ET AL: "EFFICIENT RAY-TRACING ACCELERATION TECHNIQUES FOR RADIO PROPAGATION MODELING" IEEE TRANSACTIONS ON VEHICULAR TECHNOLOGY, IEEE INC. NEW YORK, US, vol. 49, no. 6, November 2000 (2000-11), pages 2089-2104, XP001048946 ISSN: 0018-9545
- SÀNCHEZ M G ET AL: "Exhaustive ray tracing algorithm for microcellular propagation prediction models" ELECTRONICS LETTERS, IEE STEVENAGE, GB, vol. 32, no. 7, 28 March 1996 (1996-03-28), pages 624-625, XP006004965 ISSN: 0013-5194

## Description

This invention refers to the means for planning telecommunication systems on radio carriers, and in particular refers to a method for determining the values of an electromagnetic field generated by a radio base station in an urban environment.

The precise evaluation of electromagnetic field levels near radio base stations in order to check that legal restrictions have been observed, is today one of the fundamental aspects in the designing of mobile radio networks. Since the on-site measurement of electromagnetic field levels is often prohibitive cost-wise, and furthermore is not very selective when determining irradiating contributions, software instruments are becoming ever more frequently used to estimate the field levels.

In US 5,949,988 a method is disclosed for simulating RF energy distribution, which comprises obtaining a binary tree representation of a geometric environment in three-dimensions and forming a 3-D geometric database model therefrom, obtaining one or more specified receive locations within the 3-D geometric database model where RF energy distribution is desirable, simulating the propagation of an RF signal within the geometric database model, the RF signal being represented as a beam having magnitude and direction, the propagation including querying the database model to trace the beam in the geometric environment; and, determining one or more intersections of the traced beam with one or more receive locations to determine RF energy distribution at the receive locations.

From WO96/31099 a method is known for wireless communication system planning including determining an image tree based on a transmitter location and the reflective and diffractive surfaces within a coverage region, and limiting the image tree to exclude branching for higher order images requiring more than a predetermined number of reflections and/or diffractions, or potential child images corresponding to surfaces not within the scope of the parent image. Based on the image tree and propagation path back-tracing a received signal quality measure (e.g., power) is determined for each receive location. By comparing the different received signal powers, an optimal receiver unit location is determined.

Unfortunately the complexity of urban environments makes it difficult to solve the problem with theoretical calculations based on Maxwell's equations.

For this reason, and due also to the approximate description of the buildings of the environment under examination, methods have been used that estimate the electromagnetic field as the sum of contributions of reflected and diffracted rays that propagate in a straight line from the source.

An electromagnetic field evaluation application, as for example that described in "The Mobile Radio Propagation Channel" 2nd edition, by J. D. Parsone, Ed. John Wiley & Sons LTD, generally works in the following way: starting from a data base containing a vector map of the building and a data base of the irradiating sources, it calculates the optical paths of the signal that reaches a generic area of the urban environment. Subsequently, the optical paths calculated with the numerical calculation models can be used to find the values of the electromagnetic field, which can then be used to estimate the environmental impact that is a fundamental element in the design of a cellular network.

In the urban environment, the calculation of the optical paths is the most time-consuming part of the application. The complexity of the algorithm, in fact, is such that even the analysis of small areas of a few hundred metres takes far too long using present-day calculation instruments, unless optimisation procedures are used. For this reason, various techniques have been developed to introduce approximations that make it possible to perform this type of calculation in a reasonable amount of time. These techniques can be subdivided into two different categories:
- forward ray-tracer algorithms;
- backward ray-tracer algorithms.

In forward ray-tracer algorithms, a finite number of rays that are isotropically irradiated from the transmitter and their propagation into space is considered, taking into consideration possible reflections and diffractions with elements in the environment. To establish whether a ray reaches the receiver, the receiver is taken to be located at the centre of a sphere constituting the capture volume, and it is determined whether the ray intersects the sphere. This type of algorithm is suitable for studying propagation in a two-dimensional environment, whereas it is not very efficient when studying a three-dimensional environment. This is due to the considerable number of rays that must be irradiated isotropically into the solid angle, regardless of the direction in which there are objects that can interact. An operation that involves a great number of unnecessary calculations.

On the other hand, the backward ray-tracer algorithms calculate which rays connect a transmission source with a reception point, taking into account that they may, during their path, be reflected and diffracted a considerable number of times.

The most critical aspect of a ray-tracer algorithm, from the point of view of calculation time, is the "visibility test" performed between source and receiver, i.e. the check that there are no obstacles between the source and the receiver that may interrupt the rays. To perform this test, the most efficient algorithms are arranged to carry out two main operations:
- generate a structure, called "visibility tree", in which the visibility relationships between the various objects under examination, are stored;
- calculate optical paths.

The first operation builds up the visibility relationships between the various objects in the urban environment under examination. In practice, it defines the objects that can be reached by a ray that is reflected or diffracted by another object. The building of the visibility tree involves the problem of generating two-dimensional (2-D) images of three-dimensional (3-D) environments, which is called "image synthesis", and is performed by electronic processors. In actual fact, these techniques are very refined and only the parts required for the visibility test need be extrapolated for the propagation models, as will be explained later.

The second operation of a ray-tracer algorithm consists in searching for all the possible optical paths between transmitter and receiver, using the visibility tree.

The building of the visibility tree, which is the object of the first operation, has an algorithmic complexity that grows exponentially with the number of reflections requested. For this reason, as already mentioned, electronic image processing techniques are used to speed up the building and reduce the complexity of the tree.

The number of possible surfaces interacting with the rays irradiated from the source can be reduced by evaluating the angle formed between the segment that joins the source to one of the surface points under examination and the surface point's perpendicular, according to the "back-face culling" technique, described on pages 663-664 of the book entitled "Computer Graphics: Principles and Practice" 2nd edition, by J. D. Foley et al. When this angle exceeds ninety degrees the surface can be ignored in that it is physically impossible for a ray irradiated from the source to be reflected on it.

The number of surfaces can be further reduced by identifying those surfaces that are completely hidden by other objects. To do this, the article "Efficient ray-tracing technique for three-dimensional analyses of propagation in mobile communications: application to picocell and microcell scenarios," by M.F. Cattedra et al., IEEE Antennas & Propagation Magazine, voL 40 pp. 15-28 April 1998, presents a series of geometric relations to verify whether a surface completely blacks out another surface with respect to the source. The disadvantage of this technique resides in the fact that it is necessary to define a considerable number of angular relationships that are a function of how the two surfaces are positioned in space (vertical-vertical, vertical-horizontal, vertical-slanting, etc.), and in the fact that all special cases (surfaces seen under an angle which comprises the direction 0 or 2π) must be dealt with.

To overcome this problem, F. Brunello, D. Disco and D. Gambin, in "An acceleration technique using a 3D representation for ray tracer in a urban environment", IEEE Antenna and Propagation Symposium 2000, suggest that a perspective representation centred on the source be used and implemented with well-known computer graphics processing techniques.

By representing the surfaces starting with those furthest away from the source, the closest surfaces are superimposed on the others making them disappear from the overall image. The "surviving" surfaces are the ones that will be considered by the ray tracer.

The main problem with this technique is the introduction of segment distortion into the perspective representation, if the segments are represented through the segment joining the ends: non-linear transformations are in fact used that consequently distort the surfaces.

The considerable use of trigonometric functions also makes the relative processing particularly difficult from a computation point of view.

The method for determining the values of an electromagnetic field generated by a radio base station in an urban environment, which is the subject of this invention, eliminates the aforesaid disadvantages and solves the technical problems described. It gives an accurate prediction, while the processing time required by the data processing equipment to make the calculation is much less. This is due a) to the reduction in the structure that stores the visibility relationships between the various objects under examination, i.e. the visibility tree, and b) to the simplification of the visibility test used to determine the optical paths.

The subject of this invention is a method for determining the values of an electromagnetic field generated by a radio base station in an urban environment, as described in the characterising part of claim 1.

The foregoing and other characteristics of this invention will be made clearer by the following description of a preferred form of the invention, given by way of non-limiting example, and by the annexed drawings in which:
- Fig. 1 is a schematic representation of an urban environment with a transmitter, a receiver and several buildings;
- Fig. 2 is a schematic representation of an urban environment that illustrates the construction of the transmitter images;
- Fig. 3 gives an example of a visibility tree;
- Fig. 4 illustrates a projection according to a technique called "z-buffer";
- Fig. 5 shows an example of matrixes F and Z according to the z-buffer technique;
- Fig. 6 is the flow diagram that illustrates the method of this invention.

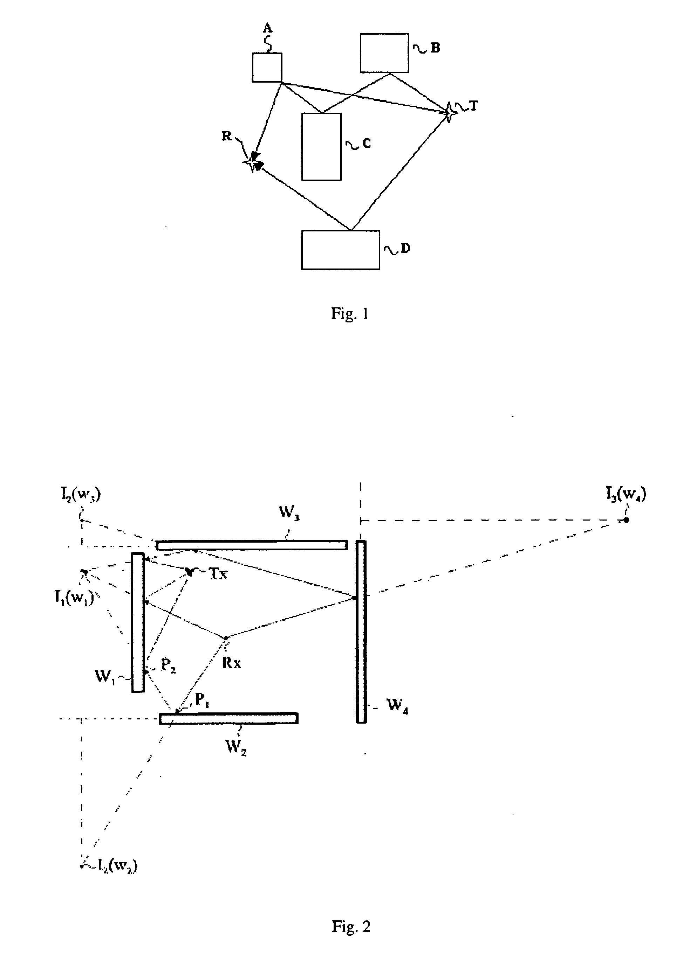

The evaluation method proposed herein uses backward ray-tracer algorithms, which consider the rays that connect a transmission source T with a reception point R, as illustrated in Fig. 1. In this case, the direct path from T to R is not possible as building C is in the way, while the paths exploiting the reflection on the surfaces of buildings B, C and D and the diffraction on the edge of building A are possible.

The environment illustrated in Fig. 2 contains the transmission source Tx and the reception point Rx that are surrounded by four surfaces W₁, W₂, W₃ and W₄. Starting from Tx, image I₁(W₁) is constructed with respect to the surface W₁, then the image I₂(W₃) of image I₁(W₁) with respect to surface W₃, then image I₃(W₄) of image I₂(W₃) with respect to surface W₄ and finally image I₂(W₂) of image I₂(W₃) with respect to surface W₂. Starting from reception point Rx, the rays are traced to the last image until they reach the point of intersection with surface W₂, thus obtaining the reflection point P₁, then from P₁ to the penultimate image I₁(W₁) to obtain P₂, and so on until source Tx is reached.

Whenever a ray is traced between Rx and a reflection point or between two reflection points, it is necessary to check whether there are any obstacles in the way that may interrupt the ray, i.e. the visibility test must be carried out, which as already mentioned involves a considerable number of calculations if all the possible obstacles are to be taken into consideration.

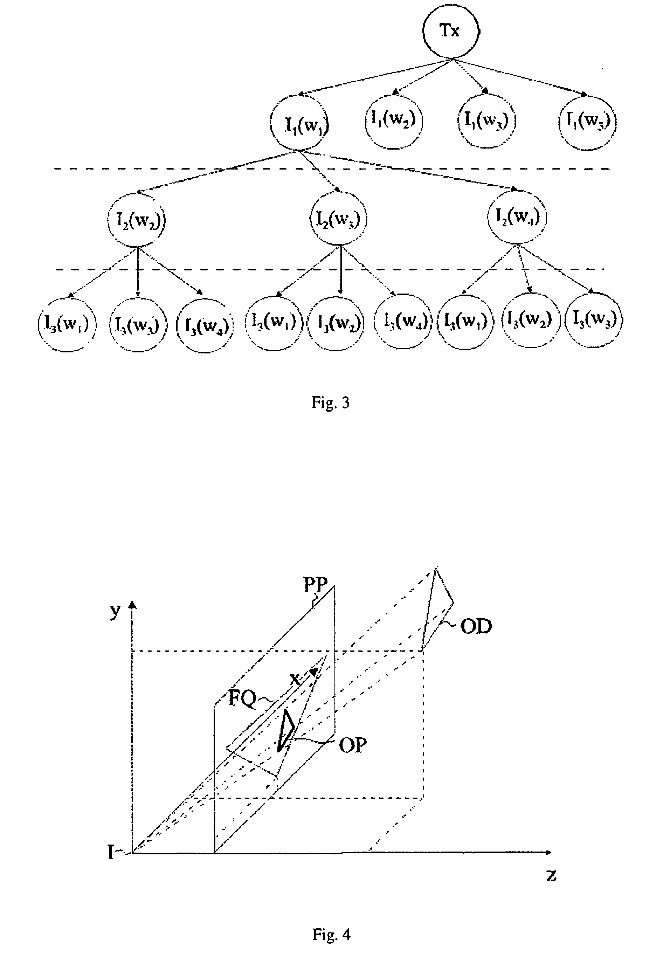

To run this test, a visibility tree must be built. Fig. 3 shows a typical visibility tree structure between Tx and Rx. To make comprehension easier, the tree has been developed as far as the third reflection only for the paths illustrated in the Fig. 2 environment. To be more precise, images I₁(Wₙ) are associated with the first reflection, images I₂(Wₙ) are associated with the second reflection and images I₃(Wₙ) are associated with the third reflection. Each node contains the image's coordinates and a reference of the surface that generated it.

As has been stated previously, the visibility tree is rather complex; in fact the number of images to be calculated for n reflections is N • (N - 1)⁵, N being the number of objects in the environment under examination. To speed up the building of this tree, the method referred to in the invention uses both the "back-face culling" technique mentioned previously, and a technique for reducing the depth of the visibility tree that exploits the z-buffer projection method.

The "back-face culling" technique is used to exclude all the objects that do not intersect the ray reflected from the surface under consideration. To check that an object does not constitute an obstacle to the ray, simply check that at least one of the following conditions exists:
- the object is not in the semi-space delimited by the plane of the reflecting surface, outside the building;
- the reflecting surface is not in the semi-space delimited by the plane of the object's surface, outside the object itself.

The technique can be applied even if the ray comes from a point source, and not from a reflecting surface. In this case, simply check that the source is not in the semi-space delimited by the plane of the object's surface.

This technique does not determine which objects in the environment constitute an obstacle to the rays, but those that do not.

The projection technique, called "z-buffer", is based on the idea of perspectively projecting the objects in the environment on the plane of the reflecting surface Wₙ that has generated image Iₘ(Wₙ) of the source, the visibility of which is to be studied, as illustrated in Fig. 4. In this figure, object OD is projected on plane PP, on which the reflecting surface FQ lies, parallel to plane x, y of the reference system x, y, z, the origin of which is in image I.

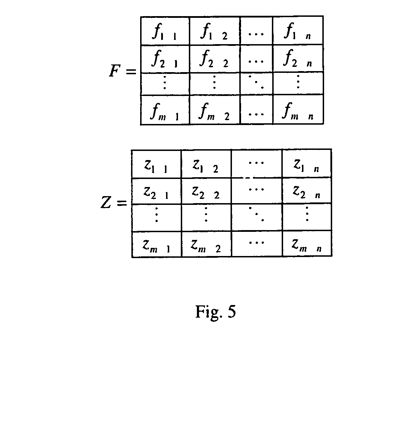

In terms of implementation, the z-buffer technique includes two matrixes, *F* and *Z*, with dimensions m • n, as shown in Fig. 5.

Each cell in matrix *F* represents a geometric element of plane PP (Fig. 4) and when this element coincides with a projection element of an object in the environment, a univocal reference is stored, e.g. a progressive whole number corresponding to the object that has generated the projection.

Similarly, each cell in matrix *Z* contains coordinate *z* of the object's corresponding element, the projection of which is represented in matrix *F*.

To be more precise, if a polygonal object is to be represented on matrix *F,* its vertices are projected onto plane PP thus obtaining the respective cartesian coordinates *u*, *v* for each one. The number indicating the polygon is entered in cells *f*ᵤᵥ of *F*; this number is also entered in all the cells that join the *f*ᵤᵥ cells relating to the vertices, placed on straight segments, and in every cell contained in the perimeter that has been just traced so as to complete the representation of the polygon on the matrix.

The projections of several objects in the environment may fall on the same geometric elements of the projection plane PP, but only the z coordinates of the object nearest the projection plane must be found in the corresponding cells in the *Z* matrix. Consequently, after an object has been perspectively projected on the plane that has generated the image, the visibility of which is being studied, the z coordinate of the point of the object generating it is calculated for each geometric element in the projection. If the value is less than that already possibly in the cell as a result of a previous projection, then the new *z* value is entered, and the number indicating the object is entered in the corresponding cell of the *F* matrix.

Finally, in order to take into account all the objects seen in the image under examination, and only those objects, all the cells relating to geometric elements that do not belong to the FQ surface area that generated the projection plane PP must be eliminated from the matrixes.

In the method referred to in the invention, z-buffer projection is used to build the visibility tree. To do this it is necessary to make the hypothesis that all the objects in the urban environment can be estimated by joining flat surfaces.

If this hypothesis applies, then the buildings can be described with a set of elementary polygons (triangles, rectangles).

In this way, all the objects that can be reached by a ray reflected from an FQ polygon coincide with those in the projection plane for a system of coordinates in which:
a) The origin of the coordinated axes system coincides with image I of the source with respect to the plane on which the FQ polygon lies.
b) The projection plane Z is equal to the distance of the FQ polygon from image I.

The construction of the visibility tree is therefore reduced to three basic steps:
- Back-face culling to determine which surfaces face the reflection plane.
- Rotation and translation of the axes system to satisfy conditions a) and b).
- *z*-buffer projection.

The z-buffer technique is used in a new way to reduce the visibility tree depth by one level. By evaluating the distances in matrix *Z* it is possible to identify the objects nearest the reflection plane. Consequently a reception point R is "visible" if its z coordinate is less than the z coordinate relating to the geometric element on which the projection of R falls.

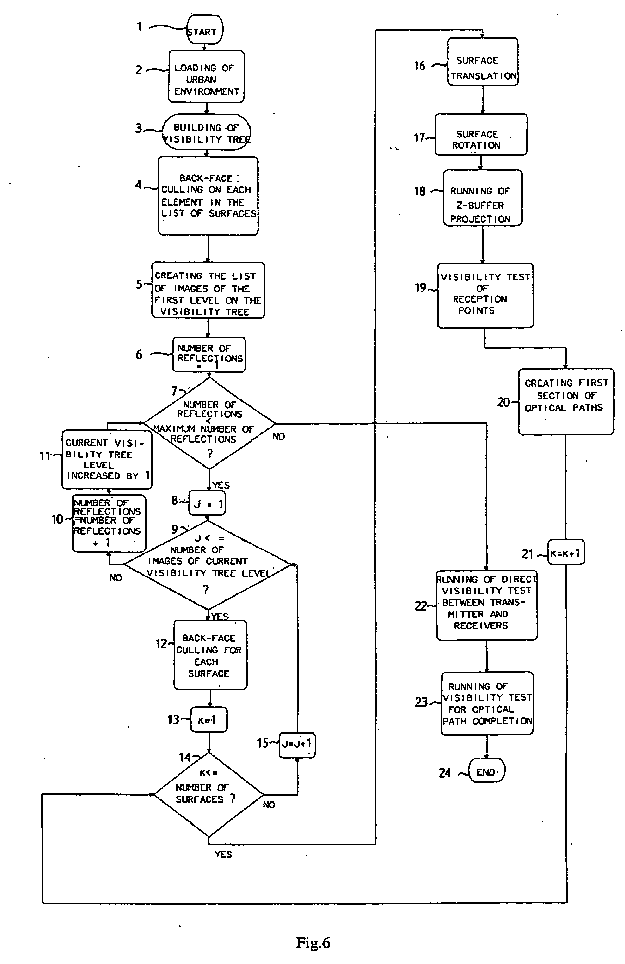

The evaluation method that uses the above techniques is shown in the flow diagram Fig. 6.

The method starts at step 1, then goes to step 2, where the urban environment under examination is loaded by creating a list of object surfaces, each one identified by a progressive number, by the coordinates of its vertices, and by a matrix for the rotation and translation operations in the visibility calculation, etc.

The next step, number 3, is where the building of the visibility tree starts, the first operation of which, step 4, is the back-face culling of each element in the surfaces list, to initially exclude any objects that are definitely not visible.

Step 5 creates the list of source images and enters this list in the visibility tree at level 1.

Step 6 initialises the number of reflections, setting it to 1.

Step 7 checks to see whether the number of reflections is less than a maximum pre-established number of reflections, and depending on the result, the procedure may go in different directions.

In particular, if it is true that the maximum number of reflections has not been reached, answer "yes" to the check, then variable J ranging from 1 to the number of images for each level of the visibility tree, is initialised at 1, step 8.

Step 9 checks to see whether variable J is less than or equal to the number of images of the current level of the visibility tree, and depending on the result the procedure may go in different directions.

In particular, if it is not true that J is less than or equal to the number of images, answer "no" to the check, then the number of reflections is increased by one unit, step 10, and then the procedure continues to the next visibility tree level, step 11, to then return to step 7.

If, however, it is true that J is less than or equal to the number of images, answer "yes" to the check, then the operations included in the back-face culling technique are performed for each surface of the objects in the list, step 12, thus obtaining a short list containing only the surfaces that can be seen from the image.

Step 13 initialises variable K at 1, which is used at the next step, 14, to examine all the surfaces just identified, and checks to see whether the number is less than or equal to the number of surfaces, and depending on the result the procedure may go in different directions.

In particular, if it is not true that K is less than or equal to the number of surfaces, answer "no" to the check, then variable J, representing the number of images, is increased by one unit, step 15, to then return to step 9.

If, however, it is true that K is less than or equal to the number of surfaces, answer "yes" to the check, step 16 is carried out to translate the surface to make it coincide with the origin of the reference system, and step 17 is performed to rotate the same surface to make it parallel with the x, y plane.

For each translated and rotated surface, the z-buffer technique performs projection, step 18, and then the visibility test of the reception points is run using their projection on the z-buffer plane and comparison with the z coordinate, step 19.

At the next step, step 20, it is therefore possible to create the first section of the path, starting from the reception point that is shown to be visible in the previous visibility test, up to the first level reflection point.

Variable K is then increased by one unit in order to examine the next surface, step 21, and then it returns to step 14.

When step 7 shows that the number of reflections examined has reached the maximum pre-established number, answer "no" to the check, the procedure moves onto the direct visibility test between transmitter and receivers, step 22, and then the visibility test to complete the optical paths, the first section of which has already been calculated, step 23.

The method ends at step 24.

As can be seen, the z-buffer graphics acceleration technique has not only be used to build the visibility tree (step 18), but also to calculate the first part of the optical paths (step 20), eliminating the visibility comparison between the reception point and the last point of reflection. By doing so the depth of the visibility tree is reduced.

Obviously this description is given as a non-limiting example. Variants and modifications are possible, without emerging from the protection field of the claims.

## Claims

1. Method for determining the values of an electromagnetic field generated by a radio base station in an urban environment, using a backward ray-tracer algorithm to calculate which rays connect a transmission source (T) with a reception point (R), taking into consideration that the rays can be reflected and diffracted by the surface of objects in the environment during their path, wherein a back-face culling technique is used to exclude all the objects that fail to intersect the rays reflected from the surfaces considered, and a visibility tree structure is generated storing the visibility relationships between the various objects under examination, **characterised in that**: said visibility tree is built between source (T) and reception point (R), wherein the source (T) is connected to an initial set of nodes representing the images (I₁ (Wₙ)) associated with a first reflection, each node of the first order being connected to several nodes of the second order representing the images (1₂(Wₙ)) of a second reflection and so on, each node containing the coordinates of the image and a reference of the surface that generated it; and
said visibility tree is build according to the z-buffer technique, wherein objects in the environment (OD) are projected perspectively onto plane (PP) of the reflecting surface (FQ) that has generated the image (Iₘ(Wₙ)) of the source (T), the visibility of which is to be tested, said plane (PP) being parallel to the plane (x, y) of the (x, y, z) reference system, the origin of which is in the image (I).

2. Method as in claim 1, **characterised by** the fact that it includes the following steps:
- start (step 1);
- loading of the urban environment by creating a list of object surfaces, each one identified with a progressive number, its vertex coordinates, and a matrix for rotation and translation operations (step 2);
- start of visibility tree construction (step 3);
- back-face culling for each element in the list of surfaces, in order to exclude the objects that are definitely not visible (step 4);
- creating the list of source (T) images and its entry at the first level of the visibility tree (step 5);
- initialising the number of reflections (step 6);
- checking to see whether the number of reflections is less than the maximum pre-established number of reflections (step 7);
- if the maximum number of reflections has not yet been reached, the first variable (J), which varies from 1 to the number of images for each visibility tree level, is initialised (step 8);
- checking to see if the first variable (J) is less than or equal to the number of images of the current visibility tree level (step 9);
- if the first variable (J) is not less than or equal to the number of images, the number of reflections is increased by one unit (step 10);
- moving on to the next visibility tree level (step 11), and then checking to see whether the number of reflections is less than the maximum pre-established number of reflections (step 7);
- if, however, the first variable (J) is less than or equal to the number of images, the operations envisaged in the back-face culling technique are carried out for each surface of the objects in the list (step 12), thus obtaining a list containing only the surfaces that can be seen from the image;
- initialising of the second variable (K), (step 13);
- checking to see whether the second variable (K) is less than or equal to the number of surfaces identified (step 14);
- if the second variable (K) is not less than or equal to the number of surfaces, the first variable (J) (step 15) is increased by one unit, and then the first variable (J) is checked again to see whether it is less than or equal to the number of the images of the current visibility tree level (step 9);
- if the second variable (K) is less than or equal to the number of surfaces, the surface is translated in order to make the image coincide with the origin of a reference system (x, y, z) (step 16);
- rotating of the same surface in order to make it parallel to plane (x, y) of said reference system (step 17);
- for each translated and rotated surface, projection is made according to the z-buffer technique, (step 18);
- visibility test of the reception points (R) by projecting them onto a z-buffer plane (PP) and comparing the (z) coordinate (step 19);
- creating the first section of the ray's path, starting from the reception point (R) that is "visible" in the previous test, to the first level reflection point (step 20);
- increasing of the second variable (K) by one unit so as to examine the next surface (step 21), and then checking again to see if the second variable is less than or equal to the number of surfaces identified (step 14);
- if the number of reflections examined has reached the maximum pre-established number (step 7), the direct visibility test between the source (T) and the receiver points (R) is carried out (step 22);
- running of the visibility test to complete the optical paths, the first section of which has already been calculated (step 23);
- end (step 24).

3. Method as in any of claims 1 to 2, **characterised by** the fact that a first matrix (*F*) and a second matrix (*Z*) of dimensions m • n are built according to the z-buffer technique, each cell of the first matrix (*F*), representing a geometric element of the plane (PP) of the reflecting surface (FQ), containing a univocal reference to the object that generated the projection, when this element coincides with an element of the projection of an object in the environment.

4. Method as in claim 3, **characterised by** the fact that each cell of the second matrix (*Z*) contains the coordinate (*z*) of the corresponding element of the object, the projection of which is represented in the first matrix (*F*).

5. Method as in claim 4, **characterised by** the fact that, if the projections (OP) of more than one environment object (OD) fall on the same geometric elements of the projection plane (PP), only the minor (*z*) coordinates, which correspond to those of the object nearest the projection plane (PP), are entered in the second matrix (*Z*) cells, and the univocal object reference is entered in the corresponding cell in the first matrix (*F*).

6. Method as in claim 3, 4 or 5, **characterised by** the fact that all the cells relating to the geometric elements that do not belong to the surface area (FQ) that generated the projection plane (PP) are eliminated from the matrixes (*F*, *Z*).

## Patentansprüche

1. Verfahren zum Bestimmen der Werte eines elektromagnetischen Feldes, welches von einer Funkbasisstation in einer urbanen Umgebung erzeugt wird, unter Verwendung eines Rückwärts-Raytraceralgorithmus, um zu berechnen, welche Strahlen eine Senderquelle (T) mit einem Empfangpunkt (R) verbinden, unter Berücksichtigung, dass die Strahlen durch die Oberfläche der Objekte in der Umgebung während ihres Pfades reflektiert und gebeugt werden können, wobei eine Backface-Culling-Technik verwendet wird, um alle Objekte auszuschließen, die die von den berücksichtigten Flächen reflektierten Strahlen nicht schneiden, und wobei eine Sichtbarkeits-Baumstruktur erzeugt wird, die die Sichtbarkeitsbeziehungen zwischen den verschiedenen untersuchten Objekten speichert, **dadurch gekennzeichnet, dass** der Sichtbarkeitsbaum zwischen der Quelle (T) und dem Empfangspunkt (R) aufgebaut wird, wobei die Quelle (T) mit einem anfänglichen Satz von Knoten verbunden ist, die die Bilder (1₁(Wₙ)) repräsentieren, die mit einer ersten Reflektion assoziiert sind, wobei ein jeder Knoten der ersten Ordnung mit mehreren Knoten der zweiten Ordnung verbunden ist, welche die Bilder (1₂(Wₙ)) einer zweiten Reflektion repräsentieren und so weiter, wobei ein jeder Knoten die Koordinaten des Bildes und eine Referenz der Fläche enthält, welche ihn erzeugt hat; und
wobei der Sichtbarkeitsbaum gemäß der z-Puffertechnik ("z-buffer technique") aufgebaut wird, wobei Objekte in der Umgebung (OD) perspektivisch auf die Ebene (PP) der reflektierenden Fläche (FQ), welche das Bild (lₘ(Wₙ)) der Quelle (T) erzeugt hat, deren Sichtbarkeit zu testen ist, projiziert werden, wobei die Ebene (PP) parallel zur Ebene (x, y) des (x, y, z)-Bezugssystems ist, dessen Ursprung im Bild (I) liegt.

2. Verfahren nach Anspruch 1, **dadurch gekennzeichnet, dass** es die folgende Schritte umfasst:
- Start (Schritt 1);
- Laden der urbanen Umgebung durch Erzeugen einer Liste von Objektflächen, von denen eine jede durch eine aufsteigende Zahl, ihre Vertexkoordinaten, und eine Matrix für Rotations- und Translationsoperationen identifiziert wird (Schritt 2);
- Start der Konstruktion des Sichtbarkeitsbaums (Schritt 3);
- Backface-Culling für ein jedes Element in der Liste der Flächen, um die Objekte auszuschließen, die mit Sicherheit nicht sichtbar sind (Schritt 4);
- Erzeugen der Liste von Bildern der Quelle (T) und Eintragen derselben in der ersten Ebene des Sichtbarkeitsbaums (Schritt 5);
- Initialisierung der Anzahl von Reflektionen (Schritt 6);
- Prüfen, um festzustellen, ob die Anzahl von Reflektionen geringer ist als eine maximale vorbestimmte Anzahl von Reflektionen (Schritt 7);
- wenn die maximale Anzahl von Reflektionen noch nicht erreicht wurde, wird die erste Variable (J), die zwischen der Zahl 1 und der Anzahl von Bildern für eine jede Ebene des Sichtbarkeitsbaums variiert, initialisiert (Schritt 8);
- Prüfen, um festzustellen, ob die erste Variable (J) kleiner oder gleich der Anzahl der Bilder der aktuellen Sichtbarkeitsbaumstufe ist (Schritt 9);
- wenn die erste Variable (J) nicht kleiner oder gleich der Anzahl von Bildern ist, wird die Anzahl von Reflektionen um eine Einheit erhöht (Schritt 10);
- Voranschreiten zur nächsten Sichtbarkeitsbaumebene (Schritt 11), und dann Prüfen, um festzustellen, ob die Anzahl von Reflektionen geringer als die maximale vorbestimmte Anzahl von Reflektionen ist (Schritt 7);
- wenn die erste Variable (J) jedoch kleiner oder gleich der Anzahl von Bildern ist, werden die Operationen, die in der Backface-Culling-Technik anvisiert sind, für eine jede Fläche der Objekte in der Liste ausgeführt (Schritt 12), um so eine Liste zu erhalten, die nur die Flächen enthält, die von dem Bild gesehen werden können;
- Initialisierung einer zweiten Variable (K) (Schritt 13);
- Prüfen, um festzustellen, ob die zweite Variable (K) kleiner oder gleich der Anzahl von identifizierten Flächen ist (Schritt 14);
- wenn die zweite Variable (K) nicht kleiner oder gleich der Anzahl von Flächen ist, wird die erste Variable (J) (Schritt 15) um eine Einheit erhöht, und dann wird die erste Variable (J) wiederum geprüft, um festzustellen, ob sie kleiner oder gleich der Anzahl der Bilder der aktuellen Sichtbarkeitsbaumebene ist (Schritt 9);
- wenn die zweite Variable (K) kleiner oder gleich der Anzahl von Flächen ist, wird die Oberfläche verschoben, um das Bild in Übereinstimmung mit dem Ursprung eines Bezugssystems (x, y, z) zu bringen (Schritt 16);
- Drehen derselben Fläche, um sie parallel zu einer Ebene (x, y) des Bezugssystems zu machen (Schritt 17);
- für eine jede verschobene und rotierte Fläche wird eine Projektion gemäß der z-Puffer-Technik ("z-buffer technique") durchgeführt (Schritt 18);
- Sichtbarkeitstest der Empfangspunkte (R) durch Projektion derselben auf eine z-Puffer-Ebene (PP) und Vergleichen der (z)-Koordinate (Schritt 19);
- Erzeugen des ersten Abschnitts des Pfades des Strahls, ausgehend von dem Empfangspunkt (R), der in dem vorhergehenden Test "sichtbar" ist, bis zum Reflektionspunkt der ersten Ebene (Schritt 20);
- Erhöhen der zweiten Variable (K) um eine Einheit, um die nächste Fläche zu untersuchen (Schritt 21), und danach erneutes Prüfen, um festzustellen, ob die zweite Variable kleiner oder gleich der Anzahl von identifizierten Flächen ist (Schritt 14);
- wenn die Anzahl von untersuchten Reflektionen die maximale vorbestimmte Anzahl erreicht hat (Schritt 7), wird der direkte Sichtbarkeitstest zwischen der Quelle (T) und den Empfangspunkten (R) ausgeführt (Schritt 22);
- Ausführen des Sichtbarkeitstests, um die optischen Pfade fertig zu stellen, deren erster Abschnitt bereits berechnet wurde (Schritt 23);
- Ende (Schritt 24).

3. Verfahren nach Anspruch 1 oder 2, **gekennzeichnet durch** die Tatsache, dass eine erste Matrix (F) und eine zweite Matrix (Z) mit den Dimensionen m • n gemäß der z-PufferTechnik aufgebaut werden, wobei eine jede Zelle der ersten Matrix (F) ein geometrisches Element der Ebene (PP) der reflektierenden Fläche (FQ) repräsentiert und eine eindeutige Referenz auf das Objekt enthält, welches die Projektion erzeugt hat, wenn dieses Element mit einem Element der Projektion eines Objekts in der Umgebung übereinstimmt.

4. Verfahren nach Anspruch 3, **gekennzeichnet durch** die Tatsache, dass eine jede Zelle der zweiten Matrix (Z) die Koordinate (z) des entsprechenden Elements des Objekts enthält, dessen Projektion in der ersten Matrix (F) repräsentiert ist.

5. Verfahren nach Anspruch 4, **gekennzeichnet durch** die Tatsache, dass, wenn die Projektionen (OP) von mehr als einem Umgebungsobjekt (OD) auf dieselben geometrischen Elemente der Projektionsebene (PP) fallen, nur die geringeren (z)-Koordinaten, die denjenigen des Objektes, welches am Nächsten an der Projektionsebene (PP) ist, entsprechen, in die Zellen der zweiten Matrix (Z) eingegeben werden, und die eindeutige Objektreferenz in die entsprechende Zelle in der ersten Matrix (F) eingegeben wird.

6. Verfahren nach Anspruch 3, 4 oder 5, **gekennzeichnet durch** die Tatsache, dass alle Zellen, die mit den geometrischen Elementen in Beziehung stehen, die nicht zum Flächenbereich (FQ) gehören, welcher die Projektionsebene (PP) erzeugt hat, von den Matrizen (F, Z) eliminiert werden.

## Revendications

1. Procédé pour déterminer les valeurs d'un champ électromagnétique généré par une station de base radio dans un environnement urbain, utilisant un algorithme indicateur de rayon en arrière pour calculer quels rayons relient une source de transmission (T) à un point de réception (R), en prenant en considération le fait que les rayons peuvent être réfléchis et diffractés par la surface d'objets dans l'environnement durant leur trajet, dans lequel une technique d'écrémage arrière est utilisée pour exclure tous les objets qui ne coupent pas les rayons réfléchis à partir des surfaces considérées, et une structure arborescente de visibilité est générée en mémorisant les relations de visibilité entre les divers objets examinés, **caractérisé en ce que** : ladite arborescence de visibilité est construite entre la source (T) et le point de réception (R), où la source (T) est connectée à un ensemble initial de noeuds représentant les images (I₁(Wₙ)) associées à une première réflexion, chaque noeud du premier ordre étant connecté à plusieurs noeuds du deuxième ordre représentant les images (I₂(Wₙ)) d'une deuxième réflexion et ainsi de suite, chaque noeud contenant les coordonnées de l'image et une référence de la surface qui l'a généré ; et
ladite arborescence de visibilité est construite selon la technique du tampon z, dans laquelle des objets dans l'environnement (OD) sont projetés en perspective sur un plan (PP) de la surface réfléchissante (FQ) qui a généré l'image (Iₘ(Wₙ)) de la source (T), dont la visibilité doit être testée, ledit plan (PP) étant parallèle au plan (x, y) du système de référence (x, y, z), dont l'origine est dans l'image (I).

2. Procédé selon la revendication 1, **caractérisé en ce qu'**il comprend les étapes suivantes :
- début (étape 1) ;
- chargement de l'environnement urbain en créant une liste de surfaces d'objets, chacune identifiée par un nombre progressif, ses coordonnées de sommet et une matrice pour des opérations de rotation et de translation (étape 2) ;
- début de la construction d'arborescence de visibilité (étape 3) ;
- écrémage arrière pour chaque élément dans la liste de surfaces, de manière à exclure les objets qui ne sont absolument pas visibles (étape 4) ;
- création de la liste d'images de source (T) et son entrée au premier niveau de l'arborescence de visibilité (étape 5) ;
- initialisation du nombre de réflexions (étapes 6) ;
- vérification pour voir si le nombre de réflexions est inférieur au nombre maximum prédéterminé de réflexions (étape 7) ;
- si le nombre maximum de réflexions n'a pas encore été atteint, la première variable (J), qui varie de 1 au nombre d'images pour chaque niveau d'arborescence de visibilité, est initialisée (étape 8) ;
- vérification pour voir si la première variable (J) est inférieure ou égale au nombre d'images du niveau d'arborescence de visibilité actuel (étape 9) ;
- si la première variable (J) n'est pas inférieure ou égale au nombre d'images, le nombre de réflexions est augmenté d'une unité (étape 10) ;
- passage au niveau d'arborescence de visibilité suivant (étape 11) et ensuite vérification pour voir si le nombre de réflexions est inférieur au nombre maximum prédéterminé de réflexions ;
- si, toutefois, la première variable (J) est inférieure ou égale au nombre d'images, les opérations envisagées dans la technique d'écrémage arrière sont exécutées pour chaque surface des objets dans la liste (étape 12), en obtenant ainsi une liste contenant seulement les surfaces qui peuvent être vues à partir de l'image ;
- initialiser la deuxième variable (K)(étape 13) ;
- vérification pour voir si la deuxième variable (K) est inférieure ou égale au nombre de surfaces identifiées (étape 14) ;
- si la deuxième variable (K) n'est pas inférieure ou égale au nombre de surfaces, la première variable (J) (étape 15) est augmentée d'une unité, et ensuite la première variable (J) est vérifiée à nouveau pour voir si elle est inférieure ou égale au nombre d'images du niveau d'arborescence de visibilité actuel (étape 9) ;
- si la deuxième variable (K) est inférieure ou égale au nombre de surfaces, la surface est translatée de manière à faire coïncider l'image avec l'origine d'un système de référence (x, y, z) (étape 16) ;
- rotation de la même surface de manière à la rendre parallèle au plan (x, y) dudit système de référence (étape 17) ;
- pour chaque surface translatée et tournée, une projection est effectuée suivant la technique du tampon z (étape 18) ;
- test de visibilité des points de réception (R) en les projetant sur un plan de tampon z (PP) et en comparant la coordonnée (z) (étape 19) ;
- création de la première section du trajet du rayon, partant du point de réception (R) qui est « visible » dans le test précédent, au point de réflexion de premier niveau (étape 20) ;
- augmentation de la deuxième variable (K) d'une unité de manière à examiner la surface suivante (étape 21), et ensuite nouvelle vérification pour voir si la deuxième variable est inférieure ou égale au nombre de surfaces identifiées (étape 14) ;
- si le nombre de réflexions examinées a atteint le nombre maximum prédéterminé (étape 7), le test de visibilité directe entre la source (T) et les points de réception (R) est exécuté (étape 22) ;
- exécuter le test de visibilité pour terminer les trajets optiques, dont la première section a déjà été calculée (étape 23) ;
- fin (étape 24).

3. Procédé selon l'une quelconque des revendications 1 à 2, **caractérisé en ce qu'**une première matrice (F) et une deuxième matrice (Z) de dimensions m x n sont construites selon la technique du tampon z, chaque cellule de la première matrice (F), représentant un élément géométrique du plan (PP) de la surface réfléchissante (FQ), contenant une référence univoque à l'objet qui a généré la projection, quand cet élément coïncide avec un élément de la projection d'un objet dans l'environnement.

4. Procédé selon la revendication 3, **caractérisé en ce que** chaque cellule de la deuxième matrice (Z) contient la coordonnée (z) de l'élément correspondant de l'objet, dont la projection est représentée dans la première matrice (F).

5. Procédé selon la revendication 4, **caractérisé en ce que**, si les projections (OP) de plus d'un objet de l'environnement (OD) tombe sur les mêmes éléments géométriques du plan de projection (PP), seules les coordonnées (z) mineures, qui correspondent à celles de l'objet le plus proche du plan de projection (PP), sont entrées dans les cellules de la deuxième matrice (Z), la référence d'objet univoque est entrée dans la cellule correspondante de la première matrice (F).

6. Procédé selon la revendication 3, 4 ou 5, **caractérisé en ce que** toutes les cellules concernant les éléments géométriques qui n'appartiennent pas à la surface (FQ) qui a généré le plan de projection (PP) sont éliminées des matrices (F, Z).
